# Europäisches Patentamt
# European Patent Office
# Office européen des brevets

(11) Publication number: **0 089 683**
**B1**

(12) **EUROPEAN PATENT SPECIFICATION**

(45) Date of publication of patent specification: **27.12.85**

(51) Int. Cl.⁴: **H 04 Q 11/04**

(21) Application number: **83102854.3**

(22) Date of filing: **22.03.83**

(54) Improvements relating to PCM switching units.

(30) Priority: **24.03.82 IT 6737082**

(43) Date of publication of application:
**28.09.83 Bulletin 83/39**

(45) Publication of the grant of the patent:
**27.12.85 Bulletin 85/52**

(84) Designated Contracting States:
**AT BE CH DE FR GB LI NL SE**

(56) References cited:
**EP-A-0 042 666**
**GB-A-2 016 866**

**INTERNATIONAL SWITCHING SYMPOSIUM,
21st-25th September 1981, Session 13 B, paper
3, pages 1-7, Montreal, CA. F.MELINDO et al.:
"LSI components for digital line stages"
ELECTRONICS, vol. 54, no. 20, 6th October
1981, pages 133-135, New York, USA.
L.REAUME: " Cross-point array IC handles 256
voice and data channels"**

(73) Proprietor: **CSELT Centro Studi e Laboratori
Telecomunicazioni S.p.A.
Via Guglielmo Reiss Romoli, 274
I-10148 Turin (IT)**

(72) Inventor: **Belforte, Piere
Via Fabbriche, 7
Torino (IT)**
Inventor: **Bostica, Bruno
Via Gorizia, 165
Torino (IT)**
Inventor: **Bovo, Amilcare
Piazza Archinto, 1
Milano (IT)**
Inventor: **Canato, Luigi
Via Pace, 14
Meda (MI) (IT)**
Inventor: **Pilati, Luciano
Via Sospello, 121
Torino (IT)**

(74) Representative: **Riederer Freiherr von Paar zu
Schönau, Anton
Freyung 615 Postfach 2664
D-8300 Landshut (DE)**

Courier Press, Leamington Spa, England.

## Description

The present invention relates to a PCM switching unit for use in a PCM time division connecting network of an exchange, the switching unit being to be connected to a control unit via a bidirectional data bus for receiving therefrom addresses and commands for carrying out time slot conversions, the switching unit comprising:

— input means for receiving the bits of incoming channels,
— a signal memory for the storage of words constituted by the bits of the incoming channels,
— output means for outputting the bits of outgoing channels,
— a control memory for storing the information about the connections among incoming and outgoing channels,
— a logical control circuit for exchanging data and the commands with the control unit,
— a timing means,
— the data bus through which said logic control circuit receives from said control unit the data relating to the concerned PCM channels and groups in one of the operations to be carried out by the switching unit, data relating to the operation itself and data to be inserted into PCM channels outgoing from said output means, and through which the control unit, upon its request, is supplied with the contents of PCM channels and of cells of the control memory,
— a bidirectional interface, placed at an end of the data bus at the input of the logic control circuit, and receiving and sending the messages transmitted via the data bus,
— switching means switching over between two inputs one of which is connected to the reading output of the signal memory presenting the read contents of addressed cells of the signal memory, and the other one is connected to a reading output of the control memory supplying the contents of the cells thereof.

Such a PCM switching unit is known from International Switching Symposium, 21st—25th September 1981, Session 13 B, paper 3, pages 1—7, Montreal, CA., F. Melindo et al.: "LSI components for digital line stages".

As known, the switching of PCM channels is performed, in up to date digital exchanges, by connection networks realized by means of commercial components. To increase cost-effectiveness and flexibility in view of further expansions of the network capacity, integrated circuits capable of carrying out the main operations of time switching have been made.

The above switching unit known from ISS'81 is a particular embodiment of a switching unit arrangement proposed in European patent application No. 81 103 628.4, filed on 12th May, 1981, and published under No. 39948.

It concerns a PCM switching unit, the input means of which convert from series to parallel the bits of the incoming channels, the output means of which convert from parallel to series the bits of the outgoing channels, and the logic control circuit receives and processes data and commands arriving from the control unit which is a microprocessor, said control memory being arranged so that it stores for each outgoing channel an additional control bit delivered by the control unit through the control logic circuit, which is to inhibit, during the time slots of one or more outgoing channels, to which it is associated at a suitable logic level, said parallel-to-series converters in order to connect in parallel outgoing PCM groups of a plurality of switching units, the inhibit operation being obtained by replaceing the words outgoing from said signal memory by words at constant logic level.

However, in addition to normal telephone operations, i.e. the connection between PCM channels and its interruption, the PCM switching unit according to the invention is to also permit diagnosis and utility operations as well as operations which facilitate interprocessor dialog. In particular features allowing the use of a switching unit in self-routing distributed-control networks are of main importance. These objects are met by the PCM switching units of the invention which units are characterized in that:

— the contents of PCM channels and of cells of the control memory, said contents to be sent to the control unit through the bidirectional data bus, are temporaneously storable in the logic control circuitry storing means,
— the output of the switching means, besides being connected to the output means, is also connected to the control unit through the logic control circuit,
— detector means generate suitable signals to be sent to the control unit when recognizing a false request for a mode of operation or the presence of active contents in the control memory or in one or more PCM channels to be extracted and transferred to the control unit;
— extracting means recognize in the time slots of PCM channels to be extracted and transferred to the control unit, the number and address of enabled PCM groups comprising PCM channels with active contents to be extracted and supplies the signal memory with them, assigning a suitable serial number to the active PCM group.

The PCM switching units provided by the present invention allow the unit to be controlled as any parallel asynchronous interface by a commercial microprocessor, associated with it for sending through buses the commands and the data, and enable it to carry out the following operations:

— connection of any incoming channel with any outgoing channel upon reception of a specific message from the control unit. This operation consists in writing the address of the incoming channel into the cell corresponding to the address of the outgoing channel in the control memory;

— inhibition of any outgoing channel upon reception of a specific message from the control unit. This operation is essential to the multiple connection of a plurality of switching units;

— initiation of all memory elements. This operation can be carried out by a logic level sent onto a suitable input.

Moreover the improvements above ensure also the following features:

— insertion of an 8-bit word (octet) into an output channel, upon reception of the specific message from the control unit. This operation, which consists in writing the octet in the cells having the address of the outgoing channel in the control memory, can be used to establish a dialog among different control units connected through a PCM group or for diagnosis purposes;

— transfer of the contents of a PCM outgoing channel extracted from the signal memory toward the control unit. This operation can be used for the dialog among different control units and for diagnosis purposes;

— transfer of an octet of the control memory. Upon request of the control unit, the contents of a control memory cell is transferred to know the conditions of the various connections established at that instant by the switching unit and also for diagnosis purposes;

— extraction of the contents of a PCM channel, namely of channel 0. Upon request of the control unit one or more PCM incoming groups are enabled to the extraction of the contents of channel 0. Hence, the switching unit extracts per each frame the contents of the individual enabled channels 0, provided there is valid information, and transfers it to the control unit. This operation in conjunction with the insertion of an octet into an outgoing channel, allows the dialog between the control units of two different switching units, connected through PCM groups.

Furthermore this switching unit may be implemented on a single chip.

An embodiment of the present invention will now be described by way of example with reference to the accompanying drawings, in which:

Fig. 1 is a block diagram of the switching unit provided by the invention;

Fig. 2 is an electrical diagram of the block denoted by LC in Fig. 1;

Fig. 3 is an electrical diagram of the block denoted by RI in Fig. 2.

In the following examples reference will be made to a switching unit designed to switch 256 channels belonging to eight incoming PCM groups at 2Mb/s, to 256 channels belonging to eight outgoing PCM groups at 2 Mb/s.

The switching unit is designed to be controlled by a commercially available 8-bit microprocessor.

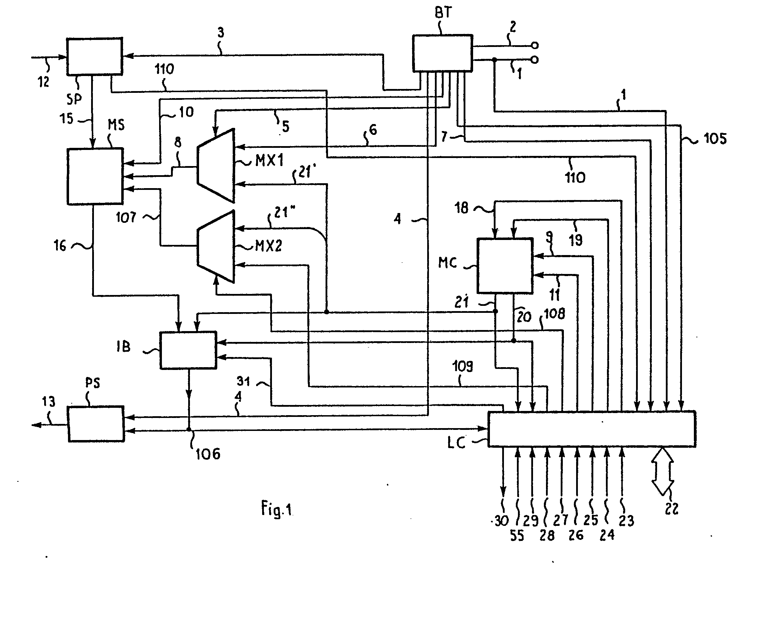

The switching unit basically consists of seven main blocks represented in Fig. 1. They are as follows:

— a time base BT;
— a serial-to-parallel input converter SP;
— a parallel-to-serial output converter PS;
— a signal memory MS;
— a control memory MC;
— an internal switching circuit IB;
— a logic control circuit LC.

Time base BT receives a clock signal at 4,096 MHz via wire 1, and a frame synchronism signal at 8 KHz via wire 2. Said signals are generated by a suitable generator not shown in the drawing.

By means of binary counters, BT generates in turn bit timing and clock signals, and sends them via 8-wire connection 3 and 16 wire connection 4 to converters SP and PS. Moreover BT generates write timing in memory MS using wire 10 to transfer the corresponding signals.

Furthermore BT generates control signals for multiplexers addressing memories MS and MC, as well as, by a binary counter, the addresses for writing the input-channel contents in signal memory MS and the addresses for the sequential reading of the control memory MC. In particular, BT sends via wire 5 the control signals to a multiplexer MX1 and via wire 105 the signal to other multiplexers contained in LC, while the addresses are sent in parallel through connections 6 and 7. These access memories MS and MC through MX1 and connection 8, and through LC and connection 9 respectively.

Eight incoming PCM groups access series-to-parallel converter SP through 8-wire connection 12.

In each time slot, the bits appearing at the 8 serial PCM inputs are stored and appear at the output under parallel form. In this way, on 64-wire connection 15 there are 64 bits corresponding to the contents of the 8 incoming groups, in function of the timing signals present on connection 3.

16-wire connection 110 supplies block LC with bits 1 and 2 of each channel 0 of the 8 input groups used to carry out the extraction of the contents of channels 0.

The 8 outgoing PCM channels are supplied by parallel-to-series converter PS. This converter operates upon reception of the control signals present on connection 4, converting in each time slot the sequence of 8 octets present on connection 106, coming from block IB.

The outgoing PCM groups are thus available on the output connection 13.

Signal memory MS has a capacity of 2,048 bits and operates at 4 Mbit/s. The contents of incoming groups are transferred by converter SP to the data input of MS through connection 15, while the contents of the outgoing groups are extracted through connection 16 to be transferred to block IB.

Each time slot is allotted in MS to 1 writing and 8 reading phases.

Five bits, coming from time base BT via wire 6, are used for addressing MS during the writing phase, and correspond to the serial number of the input channel less 1.

The writing addresses are repeated in sequence, as they are supplied by the counter contained in time base BT, while the reading addresses are randomly repeated in function of the wanted connections and are supplied by control memory MC.

Multiplexer MX1, controlled by the signal coming via wire 5 from time base BT selects the channel address in writing and reading phases.

Reading address bits are 8 and come through wires 21' and 21'' of connection 21 and through multiplexers MX1 and MX2 from memory MC. In particular, the channel and group addresses which identify the octet appearing on 8-wire connection 16, are present on connections 8 and 107 respectively.

Control memory MC is arranged in 256 9-bit words and operates at 4 Mbit/s. Data relating to the operation to be carried out, coming from logic control circuit LC through 8-wire connection 18 and a wire 19, appear at MC data input, while the output is connected through 8-wire connection 21 to multiplexers MX1, MX2 and to block IB, and via wire 20 to same block IB.

A time slot is divided into 8 reading phases and 8 reading/writing phases, the latter phases being determined by LC.

The 8 bits for the addressing of MC arrive from LC through 8-wire connection 9 and are divided into three group bits (less significant bits) and five channel bits (more significant bits). During the reading phase the address corresponding to the five channel bits is equal to the serial number of the outgoing channel plus one. .

On wire 11 there is the writing pulse for MC arriving from LC.

The nine bits of MC are organized in the following way:

— bit 0 to 7: reading address of MS (incoming channel) or word chosen by the control unit to be inserted into an outgoing PCM channel;
— bit 8: "control bit", written upon command of the control logic and designed to enable in block IB per each outgoing channel and during the reading phases the transfer to block PS, through connection 106, of the contents arriving from the output of MS or of MC.

Block IB, consisting of 8 2-input multiplexers, supplies connection 106 with the signals present on 8-wire connections 16 or 21 in function of the signals present on wire 20 and wire 31, coming from LC.

Multiplexer MX2 supplies MS via connection 107 with the 3 reading-address bits corresponding either to the 3 incoming-group bits, present on connection 21'', or to the 3 group bits coming from LC on connection 109 and used to carry out the extraction of contents of channel 0.

Logic control circuit LC acts as an interface between the control unit (in this case a microprocessor) and the internal circuits, that effect the different operations, and allows the switching element to be considered as an ordinary peripheral unit of a commercial 8-bit microprocessor.

The tasks of LC are:

— supervision of bidirectional data bus, denoted by 22, of control bus formed by wires 23, 24, 25, 26 and 30, and of the switching addresses, present on wires 27, 28 and 29;
— interpretation of the messages coming from the microprocessor and execution of the corresponding operations, at suitable time phases;
— preparation on the internal registers of the information to be transmitted to the microprocessor through bidirectional bus 22;
— extraction of the contents of the channel 0 of the groups enabled to such an operation.

Logic circuit LC, through connection 9, supplies the addresses to control memory MC, said addresses are selected inside LC between those arriving from time base BT via connection 7 and those coming from the microprocessor.

While writing in MC, LC supplies through connections 18 and 19 the contents to be stored, consisting respectively of data and control bits, and through wire 11 the writing pulse.

The signal on wire 31 controls through IB the transfer of the contents of memories MS or MC on connection 106 towards LC.

On 3-wire connection 109 LC sends to MX2 the addresses of groups comprising channels 0 whose contents are to be extracted.

The signal on wire 108 selects through MX2 either the group addresses coming from MC during the reading phase of MS or those present on connection 109.

The contents of the addressed cell of MC are sent to LC via connections 20 and 21.

There is also a wire 55, which can be directly accessed from the outside, for the switching unit initiation. .

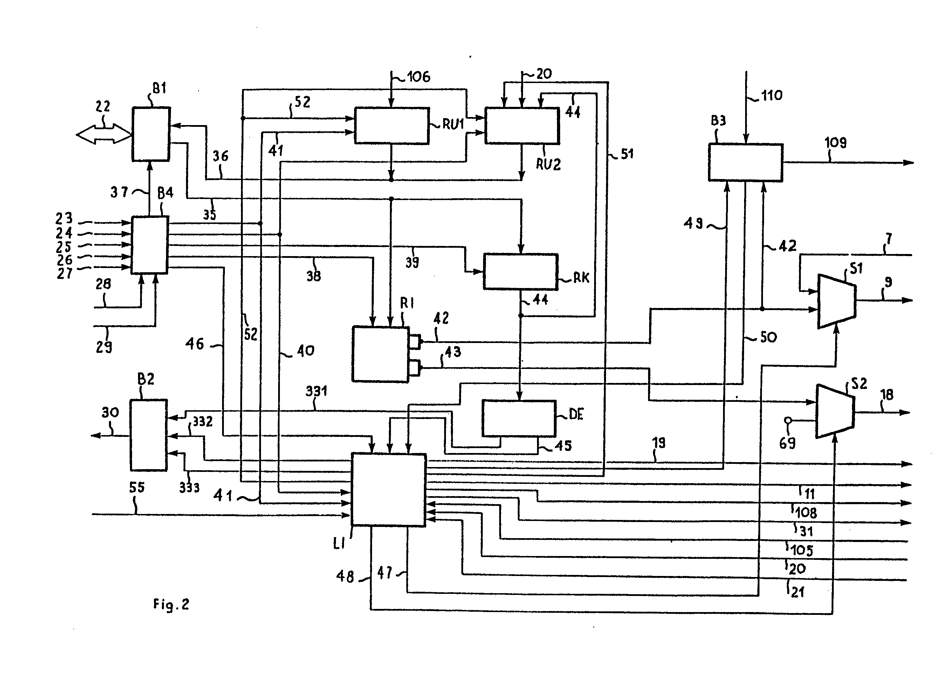

Fig. 2 shows the block diagram of logic control circuit LC. Block B1 is the interface element between the external bidirectional bus 22 and the internal 8-wire connections 35 and 36, used in input/output operations to and from the microprocessor respectively and selected by the signal present on wire 37.

All the address and control-bus signals coming from the microprocessor are decoded in block B4.

The signal on wire 23 clarifies whether the binary word present on bus 22 represents a command or a datum, while switching unit selection signal is present on wire 27.

Signals on wires 28 and 29 are used for selecting the switching unit when inserted in a matrix structure with a greater capacity; in particular the switching unit selection is carried out when the signals present on connection 28, sent from the microprocessor, coincide with those wired on connection 29.

Reading, writing and enabling signals of the switching unit are present on wires 24, 25, 26 respectively.

The signal on wire 38, generated by block B4, is used in the writing operations to load into a register R1 the datum octets on connection 35, when active signals appear on wires 25, 26 and 27.

The signal on wire 39 is used during writing operations to load into a register RK the binary control word present on connection 35 when active signals appear on wires 23, 25, 26, 27.

Signals on wires 40 and 41 are generated by block B4, when signals on wires 24, 26, 27, 28 and 29 are active at its input, and are used to read the contents of registers RU1 or RU2, depending on whether the signal on wire 23 is active or not.

Block RI is a 4 stage shift-register storing datum words relating to a mode of operation, supplying MC through connections 42 and 43 with the address and datum words respectively.

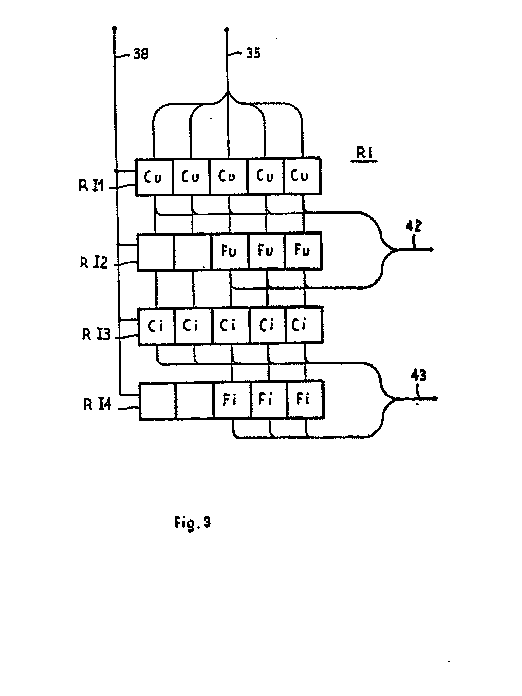

The structure of RI will be better disclosed later in connection with Fig. 3.

The command word containing the code of the operation to be carried out is stored in register RK. This word, through 5-wire connection 44, is sent to block DE and register RU2.

In a decoder DE, the correctness of the code of the operation to be carried out is checked and a possible alarm signal is generated over wire 331, as a consequence of the decoding one of the six wires of connection 45 is energized.

A multiplexer S1 supplies on wire 9 memory MC with the addresses (see also Fig. 1), by selecting upon command of the signal on wire 47 coming from block LI, either the addresses coming from time base BT through connection 7 during the readings of those present on connection 42 during the execution of the operation.

A multiplexer S2 supplies on wire 18 the octet for control memory MC, by selecting through wire 48 coming from block LI the contents present in register RI or the code for the interruption of an existing connection, having all the 8 bits at logic level "1" on wire 69.

Block B3 consists of registers, adders and priority encoders and controls the extraction of channel 0.

The command present on wire 49 memorizes in an 8 stage internal-register the signals present on connection 42; the contents of said register form the mask which enables the groups to undergo the extraction of channel 0, each bit corresponding to an input group; when the bit is at logic "1" the group is enabled.

At each time slot of channel 0, the contents of bits 1 and 2 of each group arrive through connection 110 at block B3. This block recognizes the number of groups enabled with active channels 0 and their addresses, it delivers on connection 50 the number of active groups per each frame to block LI and delivers on 3-wire connection 109 the binary address of the active input group with the highest serial number.

Registers RU1 and RU2 supply block B1 with the information to be transferred upon command of the microprocessor on bidirectional data bus 22.

The outputs of these registers are enabled by the signals present on wires 41 and 40 respectively.

Register RU1 is used to transfer the contents of block IB (Fig. 1), present on connection 106; the storage of the latter is controlled by the signal on wire 52 generated by logic LI for the operation execution.

Register RU2 is used to transfer the code of the executed operation, present on connection 44, and the control bit value, present on wire 20; the remaining three wires of connection 51 carry data concerning the executed operation.

Logic circuit LI consists of logic gates and flip-flops; it carries out the operation decoded by DE and received through connection 45, it is controlled by the signals on wires 50, 46, 55, 105, 20 and 21, and generates the already-described signals on wires 11, 19, 31, 108, 47, 48, 52, 49.

In addition block LI contains a decision logic apt to solve priority conflicts between the execution of computer controlled operations and transfer operations of the contents of active channels 0.

The external signal on wire 55 starts in block LI the initiation of the entire interface logic and the resetting of control memory MC.

The implementation of a logic circuit such as LI is no problem to the skilled in the art once defined, as we did, the input and output signals and the operations to be carried out.

Block B2 collects the signals on wires 331, 332, 333, having the meaning of recognition of false operation code, of active transfer of MC contents and of content presence of active channels 0.

In all these cases B2 generates suitable signals.

When an operation is to be carried out the microprocessor sends on data bus 22 a message consisting of a sequence of octets which are stored in two blocks RI and RK. Data corresponding to the operation to be carried out are stored in RI, while the operation code is stored in RK. Data in RI consists of 2 or 4 octets, each comprising five effective bits at the most, depending on the requested operation.

Fig. 3 shows the internal structure of block RI.

It consists of four cascaded registers RI1, RI2, RI3, RI4, controlled by a common clock via wire 38. The data appearing on connection 35 is stored in RI1, upon a microprocessor command coming via wire 38, while the other data, already present, is transferred to the next register. References Cu, Ci, Fu, Fi indicate respectively the bits relative to the identification numbers of the outgoing and incoming channels, of the outgoing and incoming groups. After two or four microprocessor controlled storages, the contents of registers RI4 and RI3, combined in a single octet on connection 43, are transferred to the control memory. The contents of registers RI1 and RI2 are similarly processed and sent onto the connection 42 to S1 (see Fig. 2) to form the addresses of the control memory MC and, in case of an operation of extraction of channel 0, the mask of the enabled input groups.

After these operations in RI, the last octet of the message present on bus 22, which is the operation code, is memorized in RK (Fig. 2). Four bits of the octet are enough to code all the operations the switching unit is to provide. The four bits are memorized upon reception of the signal present on wire 39. Seven out of 16 possible combinations of 4 bits are used to indicate the different operations, the remaining 9 represent the false codes detected and signalled by DE via wire 331.

Let us now examine, with reference to the previously described drawings, the operation of switching unit circuits when the connection of any incoming channel and any outgoing channel is requested.

The data relating to the operation above is stored in the four registers of block RI. The operation code is present in RK. Block DE sends the command relating to the connection to logic circuit LI.

LI, enabled by said signal, supplies in the suitable time phase the selection commands to multiplexers S1 and S2 via wires 47 and 48. They allow the data transfer from wires 42 and 43 to wires 9 and 18, respectively. In addition LI supplies over wire 11 the writing pulse allowing the storage of the 9-bit content in the control memory, at the address present on connection 9.

This content consists of the 8 bits present on connection 18 and of the control bit present on wire 19. This bit, generated by LI, is equal to 0 in this operation.

Once written the control memory, LI supplies the writing pulse for registers RU1 and RU2. The content just written in the control memory and present on connection 106 is loaded in RU1; the operation code, read from RK, and the control bit, written in MC (wire 20), are loaded in the first four cells of RU2. Said data, present in RU1 and RU2, can be transferred to the microprocessor by two readings and be used for diagnostic purposes, i.e. to check the execution of the operation.

In the disconnection operation the microprocessor supplies RI with the address of the outgoing channel to be disconnected and RK with the operation code by using two octets. Logic circuit LI controls only S1 to supply the address to the control memory while the contents supplied by S2 are all at logic-level "1". The control bit on wire 19 is set to the same logic value. The writing pulse on wire 11, in the suitable time phase, updates the addressed cell, the registers RU1 and RU2 are updated according to a procedure analogous to that of the connection operation.

Also the insertion operation is analogous to the connection function with the following exceptions:

— the octet to be inserted in the outgoing channel is present on connection 43, outgoing from block RI;
— the control bit (wire 19) is at logic level "1" as the content of the outgoing channel is to be extracted from the control memory; RU1 and RU2 are updated in a way analogous to the preceding ones.

To transfer the contents of a PCM channel to the microprocessor, two datum octets and a control octet are sent. The two datum octets, stored in register RI, supply through connection 42 the 8 address bits of the outgoing PCM channel, whose content is to be transferred to the microprocessor. Logic circuit LI, controlled by the circuit DE apt to decode the operation code, starts in the suitable time phase the transfer operation, presetting S1 to pass the address bits from connection 42 to connection 9. In this way, addressed control memory cell supplies through MX1 (Fig. 1) the address of the cell of the signal memory MS where the contents switched to the output channel are present.

With the aid of the block IB of Fig. 1, controlled by the signal on wire 31, said contents are transferred via wire 106 to register RU1. The operation code and the control bit are present on register RU2. The microprocessor by two readings transfers the contents of said registers inside, through bus 22.

The transfer of a word of control memory MC towards the microprocessor differs from the preceding operation in the operation code and in the logic level of the signal on wire 31. This signal causes the output from the control memory to be transferred to connection 106 through IB. In addition logic circuit LI examines the contents read by MC (8 bits on connection 21 and the control bit on connection 20) and compares them with that of a disconnected outgoing channel. If the equality is not found, LI sends via wire 332 (Fig. 2), block B2 and wire 30 a pulse that lets the microprocessor know about the presence of valid data on bus 22.

The extraction of channel 0 differs from the preceding operations as it is realized in two different phases. During the first phase the microprocessor sends a message consisting of two datum octets and of one control octet. The two datum octets, stored in registers RI1, RI2 of block RI, contain the indication of the input groups whose channels 0 are to be extracted.

These contents, present on 8-wire connection 42, are stored in block B3 upon command of the signal on wire 49 coming from logic circuit LI. Said circuit is in turn enabled by decoder DE, according to the operation code stored in register RK. Each wire of connection 42 corresponds to an input group, that is why a group is enabled when the logic level on the corresponding wire is equal to "1".

Logic circuits of block B3 and LI are entrusted with the second phase of the operation.

In block B3, at each frame, the first and second bits of the channels 0 of all the input groups are being examined. When said bits differ from the idle condition, under which they are "0" and "1" respectively, the condition of "enabled group with contents to be extracted" is identified. At the end of this phase, block B3 supplies LI through connections 50 with the following signals:

— presence of enabled groups with active channels 0;
— number of enabled groups with active channels 0.

At the same time the address of the incoming group with active channel 0 is present on the 3-wire connection 109. In the event that more active channels have been found, there is the channel with the highest serial number. Logic circuit LI, enabled by the previous signals present on connection 50, stores in register RU2 the operation code of the extraction of channel 0 and the number of the active groups. It sends the signal of presence of data at output register RU2 to the microprocessor through connection 333, block B2 and wire 30. Then B4 enables in logic circuit LI, by wire 40, the circuits causing the storage in register RU1 of the channel 0 content pertaining to the group with the highest serial number.

This content is read out of signal memory MS according to the group address present on connection 109. MS channel address corresponds to channel 0.

In addition LI stores in RU2 the address of the group whose channel 0 content is present in RU1, as well as the operation code of the extraction; it sets in block B3 on connection 109 the address of the group with active channel and lower serial number.

At each transfer of the contents of registers RU1 and RU2 towards the microprocessor, logic circuit LI repeats this procedure to the complete transfer of valid contents from channel 0 pertaining to enabled groups.

The execution of the second phase of the extraction of channel 0 does not prevent other functions from being carried out upon control of the microprocessor. Possible priority conflicts are controlled by LI.

## Claims

1. A PCM switching unit for use in a PCM time division connection network of an exchange, the switching unit being for connection to a control unit via a bidirectional data bus (22) for receiving therefrom addresses and commands for carrying out time slot conversions, the switching unit comprising:

— input means (SP) for receiving the bits of incoming channels,
— a signal memory (MS) for the storage of words constituted by the bits of the incoming channels,
— output means (PS) for outputting the bits of outgoing channels,
— a control memory (MC) for storing the information about the connections among incoming and outgoing channels,
— a logic control circuit (LC) for exchanging data and the commands with the control unit,
— a timing means (BT),
— the data bus (22) through which said logic control circuit (LC) receives from said control unit the data relating to the concerned PCM channels and groups in one of the operations to be carried out by the switching unit, data relating to the operation itself and data to be inserted into PCM channels outgoing from said output means (PS), and through which the control unit, upon its request, is supplied with the contents of PCM channels and of cells of the control memory (MC),
— a bidirectional interface (B1), placed at an end of the data bus (22) at the input of the logic control circuit (LC), and receiving and sending the messages transmitted via the data bus (22),
— switching means (IB) switching over between two inputs one of which is connected to a reading output (16) of the signal memory (MS) presenting the read contents of addressed cells of the signal memory (MS), and the other one is connected to a reading output (21) of the control memory (MC) supplying the contents of the cells thereof,

characterized in that

— the contents of PCM channels and of cells of the control memory (MC), said contents to be sent to the control unit through the bidirectional data bus (22), are temporaneously storable in the logic control circuit (LC) by storing means (RU1, RU2),
— the output (106) of the switching means (IB), besides being connected to the output means (PS), is also connected to the control unit through the logic control circuit (LC),
— detector means (B2) generate suitable signals to be sent to the control unit when recognizing a false request for a mode of operation or the presence of active contents in the control memory (MC) or in one or more PCM channels to be extracted and transferred to the control unit;
— extracting means (B3) recognize in the time slots of PCM channels to be extracted and transferred to the control unit, the number and address of enabled PCM groups comprising PCM channels with active contents to be extracted and supplies the signal memory (MS) with them, assigning a suitable serial number to the active PCM group.

2. PCM switching unit according to claim 1, characterized in that the channels extracted from one or more PCM groups are channels 0.

3. PCM switching unit according to claim 1 or 2, characterized in that

— to insert a content in an outgoing PCM channel, the content itself as well as the address of the outgoing PCM channel are stored in said logic control circuit (LC) and are supplied during the suitable time phase to said control memory (MC), where the content is stored at an address correlated to those of the outgoing PCM channel and group, an operation code, similarly stored in the logic control circuit (LC) causing the content of the control memory to be transferred to the output through said switching means (IB) and said output means (PS);

— to transfer a PCM channel content to the control unit, the PCM channel and group addresses are stored in said logic control circuit (LC) and are sent to the control memory (MC) as an address of the signal memory (MS) cell where the wanted content is present, the operation code causing the content to be transferred from said switching means (IB) to said storing means (RU1, RU2) and then, through said interface (B1) and said data bus (22), to the control unit;

— to transfer a content of the control memory (MC) to the control unit the address of the control memory (MC) cell is stored in the logic control circuit (LC) and by it is made available, said switching means (IB) being set to transfer said content to said storing means (RU1, RU2), in function of the operation code, and then through the interface (B1) and data bus (22), to the control unit;

— to extract the contents of any channel from one or more PCM groups, the addresses of the enabled groups are stored in the logic control circuit (LC), which (a) recognizes the active contents and communicates their quantity through said detector means (B2) to the control unit, which (b) addresses the signal memory (MS) in correspondence with the area containing one of the enabled groups, following a priority criterion in case of a plurality of groups, which (c) makes available the contents of the channel of the enabled group in said storing means (RU1, RU2) together with the group address and the operation code, and (d) transfers them through the interface (B1) and bidirectional data bus (22) to the control unit to the exhaustion of the enabled groups, at the next PCM frame the procedure being repeated.

**Revendications**

1. Unité de commutation MIC à employer dans le réseau de connexion MIC à répartition temporelle d'un central, l'unité de commutation étant destinée à être connectée à une unité de commande sur un bus des données bidirectionnel (22), dont ou reçoit les addresses et les commandes pour effectuer des conversions des intervalles de temps, l'unité de commutation comprenant:

— des moyens d'entrée (SP) pour recevoir les bits des voies d'entrée;

— une memoire des signaux (MS) pour emmagasiner les mots formés par les bits des voies d'entrée;

— des moyens de sortie (PS) pour émettre les bits des voies de sortie;

— une mémoire de commande (MC) pour emmagasiner les informations sur les connexions entre les voies d'entrée et de sortie;

— un circuit logique de commande (LC) pour l'échange des données et des commandes avec l'unité de commande;

— un circuit d'horloge (BT);

— le bus de données (22) à travers lequel ledit circuit logique de commande (LC) reçoit de ladite unité de commande les données relatives aux faisceaux et aux voies MIC qui interviennent dans l'une des fonctions à exécuter par une unité de commutation, les données relatives à la fonction même, les données à insérer sur les voies MIC provenant desdits moyens (PS) de sortie et envoie à ladite unité de commande, dès qu'elle le demande, le contenu des voies MIC et de cellules de ladite mémoire de commande (MC);

— un interface bidirectionnel (B1) qui est connecté à une extrémité dudit bus bidirectionnel des données (22) à l'entrée dudit circuit logique de commande (LC) et qui envoye et reçoit les messages transmis à travers le bus de données (22);

— des moyens de commutation (IB), qui effectuent la commutation entre deux entrées, dont l'une est connectée à la sortie de lecture (16) de la mémoire de signaux (MS) qui présente le contenu de lecturé des cellules adressées de la mémoire des signaux (MS), tandis que l'autre est connectée à une sortie de lecture (21) de la mémoire de commande (MC) qui fournit le contenu des cellules mêmes;

caractérisée en ce que:

— les contenus des voies MIC et des cellules de la mémoire de commande (MC), les dits contenus étant à envoyer à l'unité de commande à travers le bus des données bidirectionnel (22), sont temporairement emmagasinés dans le circuit logique de commande (LC) par des moyens d'emmagasinage (RU1, RU2);

— la sortie (106) des moyens de commutation (IB), outre à être connectée aux moyens de sortie (PS), est aussi connectée à l'unité de commande à travers la circuit logique de commande (LC);

— des moyens de détection (B2) engendrent des signaux appropriés à être envoyés à l'unité de commande, des qu'ils reconnaissent una fausse requête d'une mode d'opération ou la présence des contenus actifs dans la mêmoire de commande (MC) ou dans une ou plusieurs voies MIC à extraire et à transférer à l'unité de commande;

— des moyens d'extraction (B3) reconnaissent, dans les intervalles de temps des voies MIC à extraire et transférer à l'unité de contrôle, le nombre et l'adresse des faisceaux MIC validés comprenant des voies MIC avec des contenus actifs à extraire et les fournissent à la mémoire des signaux (MS) en assignant un approprié numéro d'ordre au faisceau MIC actif.

2. Unité de commutation MIC suivant la revendication 1, caractérisée en ce que les voies prélevées de l'un ou des plusieurs faisceaux MIC sont les voies 0.

3. Unité de commutation MIC selon la revendication 1 ou 2, caractérisé en ce que:

— pour insérer un contenu dans une voie MIC de sortie, le contenu même et l'addresse de la voie MIC de sortie sont emmagasinés dans ledit circuit logique de commande (LC) et sont fournis dans la phase de temps appropriée à ladite mémoire de commande (MC) où le contenu est mémorisé à une adresse correspondante à celles de la voie et du faisceau MIC de sortie, le code opération de la fonction, également mémorisé dans le circuit logique de commande, provoquant le transfert du contenu de la mémoire de commande à la sortie à travers lesdits moyens de commutation (IB) et lesdits moyens de sortie (PS);

— pour transférer le contenu d'une voie MIC vers l'unité de commande, les adresses de la voie et du faisceau MIC sont emmagasinées dans ledit circuit logique de commande (LC) et sont envoyées à la mémoire de commande (MC) sous la forme de l'adresse d'une cellule de la mémoire de signaux (MS) où il y a le contenu désiré, le code opération agissant de manière qu'il soit transféré desdits moyens de commutation (IB) auxdits moyens d'emmagasinage (RU1, RU2), et de ceux-ci à travers ledit interface (B1) et ledit bus de données (22), à l'unité de commande;

— pour transférer un contenu de la mémoire de commande (MC) vers l'unité de commande, l'adresse de la cellule de la mémoire de commande (MC) est mémorisée dans le circuit logique de commande (LC) et par lui est rendu disponible, les dits moyens de commutation (IB) étant prêts à transférer ledit contenu auxdits moyens de commutation (RU1, RU2), en fonction du code opération de la fonction, et puis à travers l'interface (B1) et le bus de données (22), à l'unité de commande;

— pour extraire des contenus de n'importe quelle voie d'un ou d'une pluralité de faisceaux MIC les adresses de faisceaux validés sont mémorisées dans le circuit de commande (LC), qui (a) reconnaît les contenus actifs et en communique le nombre à travers lesdits moyens de détection (B2) à l'unité de commande, qui (b) adresse la mémoire de signaux (MS) en correspondance de la zone qui contient l'un des faisceau validés, suivant un critère de priorité au cas d'une pluralité de faisceaux, qui (c) fournit les contenus de la voie du faisceau validé dans lesdits moyens d'emmagasinage (RU1, RU2) avec l'adresse du faisceau et le code opération de la fonction, et (d) les transfère à travers l'interface (B1) et le bus bidirectionnel de données (22) vers l'unité de commande jusqu'à ce qu'on a traité tous les faisceaux validés, pour recommencer le cycle à la trame MIC suivante.

**Patentansprüche**

1. PCM-Vermittlungseinheit zur Verwendung in einem PCM-zeitmultiplexen Koppelnetz einer Vermittlungsstelle, wobei die Vermittlungseinheit mit einer Steuereinheit über einen bidirektionalen Datenbus (22) zum Empfang von Adressen und Befehlen zur Durchführung von Zeitlagenumsetzungen von dieser Steuereinheit zu verbinden ist und folgende Elemente enthält:

— Eingangseinrichtungen (SP) zum Empfangen der Bits ankommender Kanäle;
— einen Signalspeicher (MS) für die Speicherung von durch die Bits der ankommenden Kanäle gebildeten Wörtern;
— Ausgangseinrichtungen (PS) zum Abgeben der Bits der abgehenden Kanäle;
— einen Steuerspeicher (MC) zum Speichern der Information über die Verbindungen zwischen ankommenden und abgehenden Kanälen;
— eine logische Steuerschaltung (LC) zum Austauschen von Daten und den Befehlen mit der Steuereinheit;
— einen Zeitgeber (BT);
— den Datenbus (22), über den die logische Steuerschaltung (LC) von der Steuereinheit die Daten empfängt, die sich auf die betroffenen PCM-Kanäle und -Gruppen in einer der von der Vermittlungseinheit durchzuführenden Operationen beziehen, ferner Daten, die sich auf die Operation selbst beziehen, und Daten, die in PCM-Kanäle, die von der Ausgangseinrichtung (PS) ausgehen, einzusetzen sind, und über den die Steuereinheit auf ihre Anforderung hin mit dem Inhalt von PCM-Kanälen und von Zellen des Steuerspeichers (MC) beliefert wird;
— eine bidirektionale Anpassungsschaltung (B1), die an einem Ende des Datenbusses (22) am Eingang der logischen Steuerschaltung (LC) angeordnet ist und die über den Datenbus (22) die zu übertragenden Nachrichten empfängt und sendet;
— eine Schalteinrichtung (IB), die zwischen zwei Eingängen umschaltet, von denen einer mit einem Leseausgang (16) des Signalspeichers (MS), der den Leseinhalt der adressierten Zellen des Signalspeichers (MS) wiedergibt, und der andere mit einem Leseausgang (21) des Steuerspeichers (MC), der den Inhalt von dessen Zellen liefert, verbunden ist,

dadurch gekennzeichnet, daß:

— der Inhalt von PCM-Kanälen und von Zellen des Steuerspeichers (MC) vorübergehend in der logischen Steuerschaltung (LC) mit Hilfe von Speichereinrichtungen (RU1, RU2) speicherbar ist, wobei dieser Inhalt über den bidirektionalen Datenbus (22) zur Steuereinheit zu senden ist;

— der Ausgang (106) der Schalteinrichtung (IB), außer daß er mit den Ausgangseinrichtungen (PS) verbunden ist, noch mit der Steuereinheit über die logische Steuerschaltung (LC) verbunden ist;

— eine Detektoreinrichtung (B2) entsprechende an die Steuereinheit zu sendende Signale erzeugt, wenn sie eine falsche Anforderung für eine Betriebsweise oder das Vorhandensein aktiven Inhalts im Steuerspeicher (MC) oder in einem oder mehreren der zu extrahierenden und zur Steuerschaltung zu übertragenden PCM-Kanäle erkennt;

— eine Extrahiereinrichtung (B3) in den Zeitlagen der zu extrahierenden und zur Steuereinheit zu übertragenden PCM-Kanäle die Anzahl und Adresse aktivierter PCM-Bündel erkennt, die PCM-Kanäle mit aktivem zu extrahierendem Inhalt umfassen, und mit diesen den Signalspeicher (MS) speist, wobei sie dem aktiven PCM-Bündel eine entsprechende laufende Nummer zuordnet.

2. PCM-Vermittlungseinheit nach Anspruch 1, dadurch gekennzeichnet, daß die von einem oder mehreren der PCM-Bündel extrahierten Kanäle die Kanäle 0 sind.

3. PCM-Vermittlungseinheit nach Anspruch 1 oder 2, dadurch gekennzeichnet, daß:

— zum Einsetzen eines Inhalts in einen abgehenden PCM-Kanal dieser Inhalt selbst sowie die Adresse des abgehenden PCM-Kanals in der logischen Steuerschaltung (LC) gespeichert werden und während der passenden Zeitphase an den Steuerspeicher (MC) geliefert werden, wo der Inhalt an einer Adresse gespeichert wird, die an die Adressen der abgehenden PCM-Kanäle und -Bündel angepaßt ist, wobei ein Operationscode, der in gleicher Weise in der logischen Steuerschaltung (LC) gespeichert ist, bewirkt, daß der Inhalt des Steuerspeichers durch die Schalteinrichtung (IB) und die Ausgangseinrichtungen (PS) zum Ausgang übertragen wird;

— zum Übertragen des Inhalts eines PCM-Kanals zur Steuereinheit die PCM-Kanal- und -Bündel-Adressen in der logischen Steuerschaltung (LC) gespeichert und an den Steuerspeicher (MC) als Adresse der Zelle des Signalspeichers (MS) gesendet wird, in der der gewünschte Inhalt vorhanden ist, wobei der Operationscode bewirkt, daß der Inhalt von der Schalteinrichtung (IB) zu den Speichereinrichtungen (RU1, RU2) und dann über die Anpassungsschaltung (B1) und den Datenbus (22) zur Steuereinheit übertragen wird;

— zum Übertragen eines Inhalts des Steuerspeichers (MC) zur Steuereinheit die Adresse der Zelle des Steuerspeichers (MC) in der logischen Steuerschaltung (LC) gespeichert und durch sie verfügbar gemacht wird, wobei die Schalteinrichtung (IB) so eingestellt ist, daß sie diesen Inhalt zu den Speichereinrichtungen (RU1, RU2) in Abhängigkeit vom Operationscode und dann über die Anpassungsschaltung (B1) und den Datenbus (22) zur Steuereinheit überträgt;

— zum Extrahieren des Inhalts eines beliebigen Kanals von einem oder mehreren PCM-Bündeln die Adressen der aktivierten Gruppen in der logischen Steuerschaltung (LC) gespeichert werden, welche (a) die aktiven Inhalte erkennt und ihre Quantität über die Detektoreinrichtung (B2) zur Steuereinheit meldet, (b) den Signalspeicher (MS) in Übereinstimmung mit dem eine der aktivierten Gruppen enthaltenden Bereich adressiert, wobei im Fall einer Mehrzahl von Bündeln einem Prioritätskriterium gefolgt wird, (c) den Inhalt des Kanals der aktivierten Gruppe in den Speichereinrichtungen (RU1, RU2) zusammen mit der Gruppenadresse und dem Operationscode verfügbar macht und (d) ihn über die Anpassungsschaltung (B1) und den bidirektionalen Datenbus (22) bis zur Erschöpfung der aktivierten Bündel zur Steuereinheit überträgt,

und daß im nächsten PCM-Rahmen der Vorgang wiederholt wird.

Fig.1

Fig. 2

Fig. 3